# EUROPÄISCHE PATENTANMELDUNG

(11) **EP 3 734 098 A1**
(43) Veröffentlichungstag der Anmeldung: **04.11.2020**
(21) Anmeldenummer: 19171803.0
(22) Anmeldetag: 30.04.2019
(51) Int. Cl.: F16C 33/58, F03D 80/70, F16C 35/067, F16C 19/36

(54) **WÄLZLAGER UND VORRICHTUNG MIT EINEM SOLCHEN WÄLZLAGER**

(71) Anmelder: Flender GmbH, 46395 Bocholt (DE)
(72) Erfinder: Holweger, Dirk, 40629 Düsseldorf (DE)
(74) Vertreter: Maier, Daniel Oliver

(57) **Zusammenfassung**

Die Erfindung betrifft ein Wälzlager (4) mit einem Wälzlagerinnenring (5), einem Wälzlageraußenring (6) und zwischen dem Wälzlagerinnenring (5) und dem Wälzlageraußenring (6) angeordneten Wälzkörpern (7), wobei am Wälzlageraußenring (6) zumindest eine Aufnahme (12) ausgebildet ist, in die bei der Montage des Wälzlagers (4) ein Fixierelement (13) eingesetzt werden kann, um eine Bewegung des Wälzlageraußenrings (6) in Umfangsrichtung relativ zu demjenigen Bauteil (3), an dem dieser befestigt wird, zu verhindern, wobei die zumindest eine Aufnahme (12) derart angeordnet ist, dass die zumindest eine Aufnahme (12) und/oder das in der zumindest einen Aufnahme (12) aufzunehmende Fixierelement (13) während der Montage des Wälzlagers (4) einsehbar ist/sind. Ferner betrifft die Erfindung eine Vorrichtung (1), insbesondere in Form eines Getriebes, umfassend zumindest ein ortsfest angeordnetes Innenteil (2) und ein relativ zu diesem Innenteil (2) drehbar angeordnetes Außenteil (3), wobei das Außenteil (3) über ein erfindungsgemäßes Wälzlager (4) an dem Innenteil (2) gelagert ist. Darüber hinaus betrifft die Erfindung einen Antriebsstrang (21) mit einer solchen Vorrichtung (1), eine Windkraftanlage (17) mit einem solchen Antriebsstrang (21) sowie eine Industrie-Applikation (23) mit einer solchen Vorrichtung (1)

## Beschreibung

Die Erfindung betrifft ein Wälzlager mit einem Wälzlagerinnenring, einem Wälzlageraußenring und zwischen dem Wälzlagerinnenring und dem Wälzlageraußenring angeordneten Wälzkörpern, wobei am Wälzlageraußenring zumindest eine Aufnahme ausgebildet ist, in die bei der Montage des Wälzlagers ein Fixierelement eingesetzt werden kann, um eine Bewegung des Wälzlageraußenrings in Umfangsrichtung relativ zu demjenigen Bauteil, an dem der Wälzlageraußenring befestigt wird, zu verhindern. Ferner betrifft die Erfindung eine Vorrichtung umfassend zumindest ein ortsfest angeordnetes Innenteil und ein relativ zu diesem Innenteil drehbar angeordnetes Außenteil, wobei das Außenteil über ein solches Wälzlager an dem Innenteil gelagert ist. Zudem betrifft die Erfindung einen Antriebsstrang, umfassend eine Rotorwelle, die drehmomentübertragend mit einem Getriebe verbunden ist, das wiederum drehmomentübertragend mit einem Generator verbunden ist. Ferner betrifft die Erfindung eine Windkraftanlage, umfassend einen Rotor, der an einer Gondel angebracht ist, wobei in der Gondel ein Antriebsstrang angeordnet ist, der drehmomentübertragend mit dem Rotor verbunden ist. Darüber hinaus betrifft die Erfindung eine Industrie-Applikation, umfassend ein Antriebsmittel, das mit einem Getriebe drehmomentübertragend verbunden ist, das mit einer mechanischen Anwendung drehmomentübertragend gekoppelt ist.

Eine Aufgabe der vorliegenden Erfindung besteht darin, ein Wälzlager, eine Vorrichtung, einen Antriebsstrang, eine Windkraftanlage und eine Industrie-Applikation der eingangs genannten Art mit verbessertem Aufbau zu schaffen.

Zur Lösung dieser Aufgabe schafft die vorliegende Erfindung ein Wälzlager der eingangs genannten Art, das dadurch gekennzeichnet, ist, dass die zumindest eine Aufnahme derart angeordnet ist, dass die zumindest eine Aufnahme und/oder das in der zumindest einen Aufnahme aufzunehmende Fixierelement während der Montage des Wälzlagers einsehbar ist/sind. Entsprechend kann während der Montage des Wälzlageraußenrings an einem Bauteil die korrekte Ausrichtung des Wälzlageraußenrings zu diesem Bauteil visuell problemlos verifiziert werden, was eine einfache Montage nach sich zieht.

Gemäß einer ersten erfindungsgemäßen Variante weist der Wälzlageraußenring einen bezogen auf eine Hauptdrehachse radial auswärts vorstehenden Flanschring auf, der mit Aufnahmen in Form von sich bezogen auf die Hauptdrehachse axial erstreckenden Durchgangsbohrungen versehen ist, die in Umfangsrichtung des Wälzlagers bevorzugt gleichmäßig verteilt angeordnet sind. Ein solcher Flanschring bleibt beim axialen Einschieben des Wälzlageraußenrings in ein Außenteil stets sichtbar. Die Befestigung des Wälzlageraußenrings am Außenteil kann dann in einfacher Weise erfolgen, indem beispielsweise Befestigungsschrauben durch die am Flanschring ausgebildeten Durchgangsbohrungen eingesetzt und in entsprechende, am Außenteil vorgesehene Gegenaufnahmen in Form von Gewindebohrungen geschraubt werden.

Bei einer weiteren erfindungsgemäßen Variante sind Aufnahmen in Form von sich ausgehend von der Außenumfangsfläche des Wälzlageraußenrings bezogen auf eine Hauptdrehachse radial einwärts erstreckenden Sackbohrungen vorgesehen, die in Umfangsrichtung des Wälzlagers bevorzugt gleichmäßig verteilt angeordnet sind. Zur Montage des Wälzlagerings ist das Außenteil im Bereich eines radial zugänglichen Ringabsatzes, an dessen Innenumfang der Wälzlagerring montiert werden soll, mit analog ausgebildeten, sich radial durch einen Ringabsatz erstreckenden Durchgangsbohrungen zu versehen. Beim Einschieben des Wälzlageraußenring in den Ringabsatz des Außenteils kann dann zur Sicherstellung einer ordnungsgemäßen Ausrichtung visuell verifiziert werden, dass die Durchgangsbohrungen des Außenteils mit den Sackbohrungen des Wälzlageraußenrings fluchten, woraufhin von außen Fixierelemente beispielsweise in Form von Fixierstiften in durch die Durchgangsbohrungen in die Sackbohrungen eingeführt werden können.

Gemäß noch einer weiteren erfindungsgemäßen Variante ist die zumindest eine Aufnahme in Form einer an der Außenumfangsfläche des Wälzlageraußenrings ausgebildeten, sich bezogen auf eine Hauptdrehachse axial erstreckenden, länglich ausgebildeten Aussparung vorgesehen, beispielsweise in Form einer Passfedernut, wobei bevorzugt mehrere solcher Aufnahmen vorgesehen sind, die vorteilhaft in Umfangsrichtung des Wälzlagers gleichmäßig verteilt angeordnet sind. Das Außenteil, an dem das Wälzlager montiert werden soll, ist dann mit einer oder mit mehreren korrespondierend ausgebildeter Gegenaufnahmen in Form von Passfedernuten zu versehen, so dass eine Sicherung des Wälzlageraußenrings am Außenteil über Passfedern erfolgen kann. Auch bei dieser Variante ist eine ordnungsgemäße Ausrichtung des Wälzlageraußenrings während der Montage des Wälzlagers ohne Problem visuell verifizierbar.

Zur Lösung der eingangs genannten Aufgabe schafft die vorliegende Erfindung ferner eine Vorrichtung umfassend zumindest ein ortsfest angeordnetes Innenteil und ein relativ zu diesem Innenteil drehbar angeordnetes Außenteil, dadurch gekennzeichnet, dass das Außenteil über ein erfindungsgemäßes Wälzlager an dem Innenteil gelagert ist, dass das Außenteil mit zumindest einer Gegenaufnahme versehen ist, und dass der Wälzlageraußenring über zumindest ein in die Aufnahme und die Gegenaufnahme eingreifendes Fixierelement gegen eine Bewegung in Umfangsrichtung des Wälzlagers relativ zum Außenteil gesichert ist.

Bevorzugt ist der Wälzlageraußenring über eine Spielpassung, Presspassung oder Übergangspassung an dem Außenteil gehalten, wodurch ein sehr stabiler Aufbau erzielt wird.

Gemäß einer Ausgestaltung der vorliegenden Erfindung ist die Vorrichtung ein Planetengetriebe.

Bei dem Außenteil handelt es sich bevorzugt um einen Planetenträger, wobei das Innenteil vorteilhaft durch ein Getriebegehäuse gebildet ist.

Ferner schafft die Erfindung einen Antriebsstrang, umfassend eine Rotorwelle, die drehmomentübertragend mit einem Getriebe verbunden ist, das wiederum drehmomentübertragend mit einem Generator verbunden ist, dadurch gekennzeichnet, dass das Getriebe als erfindungsgemäße Vorrichtung ausgebildet ist.

Zudem schafft die vorliegende Erfindung eine Windkraftanlage, umfassend einen Rotor, der an einer Gondel angebracht ist, wobei in der Gondel ein Antriebsstrang angeordnet ist, der drehmomentübertragend mit dem Rotor verbunden ist, wobei der Antriebsstrang als erfindungsgemäßer Antriebsstrang ausgebildet ist.

Darüber hinaus schafft die vorliegende Erfindung eine Industrie-Applikation, umfassend ein Antriebsmittel, das mit einem Getriebe drehmomentübertragend verbunden ist, das mit einer mechanischen Anwendung drehmomentübertragend gekoppelt ist, wobei das Getriebe als erfindungsgemäße Vorrichtung ausgebildet ist.

Weitere Vorteile und Merkmale der vorliegenden Erfindung werden anhand der nachfolgenden Beschreibung unter Bezugnahme auf die beiliegende Zeichnung deutlich. Darin ist
- FIG 1: eine schematische Teilansicht einer Vorrichtung gemäß einer Ausführungsform der vorliegenden Erfindung;
- FIG 2: eine vergrößerte Ansicht des in FIG 1 mit dem Buchstaben A gekennzeichneten Ausschnitts, die ein Wälzlager gemäß einer ersten Ausführungsform der vorliegenden Erfindung zeigt;
- FIG 3: eine vergrößerte Ansicht des in FIG 1 mit dem Buchstaben A gekennzeichneten Ausschnitts, die ein Wälzlager gemäß einer zweite Ausführungsform der vorliegenden Erfindung zeigt;
- FIG 4: eine vergrößerte Ansicht des in FIG 1 mit dem Buchstaben A gekennzeichneten Ausschnitts, die ein Wälzlager gemäß einer dritten Ausführungsform der vorliegenden Erfindung zeigt;
- FIG 5: eine geschnittene Seitenansicht einer Ausführungsform einer erfindungsgemäßen Windkraftanlage;
- FIG 6: eine schematische Darstellung einer Ausführungsform eines erfindungsgemäßen Antriebsstrangs und
- FIG 7: eine schematische Darstellung einer Ausführungsform einer erfindungsgemäßen Industrie-Applikation.

Gleiche Bezugsziffern beziehen sich nachfolgend auf gleiche oder gleichartig ausgebildete Bauteile oder Bauteilbereiche.

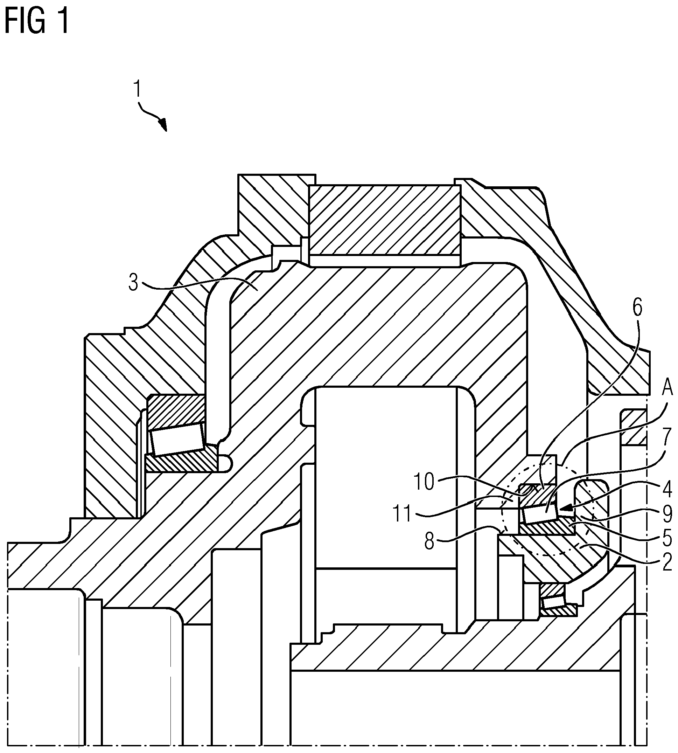

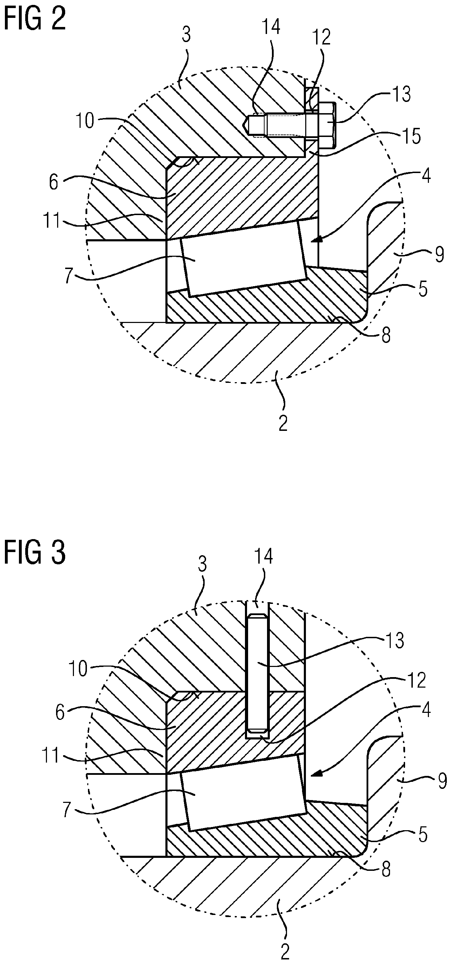

FIG 1 zeigt eine Vorrichtung 1 gemäß einer Ausführungsform der vorliegenden Erfindung, bei der es sich vorliegend um ein Planetengetriebe handelt. Die Vorrichtung 1 umfasst ein ortsfest angeordnetes Innenteil 2, das durch ein Getriebegehäuse definiert wird, und ein relativ zu diesem Innenteil 2 drehbar angeordnetes Außenteil 3, bei dem es sich um einen Planetenträger handelt. Das Außenteil 3 ist über ein Wälzlager 4 an dem Innenteil 2 gelagert. Das Wälzlager 4 umfasst einen Wälzlagerinnenring 5, einen Wälzlageraußenring 6 und zwischen dem Wälzlagerinnenring 5 und dem Wälzlageraußenring 6 angeordnete Wälzkörper 7. FIG 1 zeigt die grundsätzliche Positionierung des Wälzlagers 4 relativ zum Innenteil 2 und zum Außenteil 3. Der Wälzlagerinnenring 5 ist beispielsweise über eine Presspassung, Spielpassung oder Übergangspassung an einer Außenumfangsfläche 8 des Innenteils 2 gehalten, wobei die bezogen auf eine Hauptdrehachse 16 axiale Position des Wälzlagerinnenrings 5 am Innenteil 2 durch einen bezogen auf die Hauptspannachse 16 radial auswärts vorstehenden Innenteilabsatz 9 definiert ist, der bei der Montage als Anschlag dient. Der Wälzlageraußenring 6 ist beispielsweise ebenfalls über eine Presspassung, Spielpassung oder Übergangspassung an einer Innenumfangsfläche 10 des Außenteils 3 befestigt, wobei die bezogen auf die Hauptdrehachse 16 axiale Position des Wälzlageraußenrings 6 an dem Außenteil 3 durch einen bezogen auf die Hauptdrehachse 16 radial einwärts vorstehenden Außenteilabsatz 11 definiert ist, der bei der Montage als Anschlag dient. Der an dem Außenteil 3 gehaltene Wälzlageraußenring 6 ist gegen eine Wanderbewegung in Umfangsrichtung des Wälzlagers 4 gesichert. Am Wälzlageraußenring 6 sind hierzu eine oder mehrere Aufnahmen 12 ausgebildet, in die jeweils ein Fixierelement 13 eingreift, das in einer am Außenteil 3 vorgesehenen Gegenaufnahme 14 gehalten ist. Die Figuren 2 bis 4 zeigen drei Wälzlager 4 gemäß verschiedenen Ausführungsformen der vorliegenden Erfindung, bei denen Aufnahmen 12, Fixierelemente 13 und Gegenaufnahmen 14 unterschiedlich realisiert sind.

Bei der in FIG 2 dargestellten Variante weist der Wälzlageraußenring 6 einen bezogen auf die Hauptdrehachse 16 radial auswärts vorstehenden Flanschring 15 auf, der mit Aufnahmen 12 in Form von sich bezogen auf die Hauptdrehachse 16 axial erstreckenden Durchgangsbohrungen versehen ist, die in Umfangsrichtung des Wälzlagers bevorzugt gleichmäßig verteilt entlang des Flanschrings 15 angeordnet sind. Die Gegenaufnahmen 14 sind als sich bezogen auf die Hauptdrehachse 16 axial erstreckende Gewindebohrungen ausgeführt, die stirnseitig an dem Außenteil 3 und fluchtend zu den Aufnahmen 12 des Wälzlageraußenrings 6 ausgebildet sind. Während der Montage des Wälzlagers wird der Wälzlageraußenring 6 in das Außenteil 3 eingeschoben, wobei darauf geachtet wird, dass die Aufnahmen 12 und die Gegenaufnahmen 14 fluchtend zueinander ausgerichtet sind. Anschließend wird der Wälzlageraußenring 6 stirnseitig mit dem Außenteil 3 unter Verwendung von Fixierelementen 13 in Form von Befestigungsschrauben verschraubt, wodurch die Sicherung des Wälzlageraußenrings 6 gegen unerwünschtes Wandern in Umfangsrichtung des Wälzlagers 4 realisiert wird.

Bei der in FIG 3 dargestellten Variante sind Aufnahmen 12 in Form von sich ausgehend von der Außenumfangsfläche des Wälzlageraußenrings 6 bezogen auf die Hauptdrehachse 16 radial einwärts erstreckenden Sackbohrungen vorgesehen, die in Umfangsrichtung des Wälzlagers 4 bevorzugt gleichmäßig verteilt entlang der Außenumfangsfläche des Wälzlageraußenrings 6 angeordnet sind. Die Gegenaufnahmen 14 werden durch sich radial durch das Außenteil 3 erstreckende, von außen zugängliche und mit den Aufnahmen 12 fluchtende Durchgangsbohrungen gebildet. Die Fixierung in Umfangsrichtung des Wälzlagers 4 erfolgt über Fixierelemente 13 in Form von Fixierstiften, die von außen durch die Gegenaufnahmen 14 in die Aufnahmen 12 eingesetzt sind.

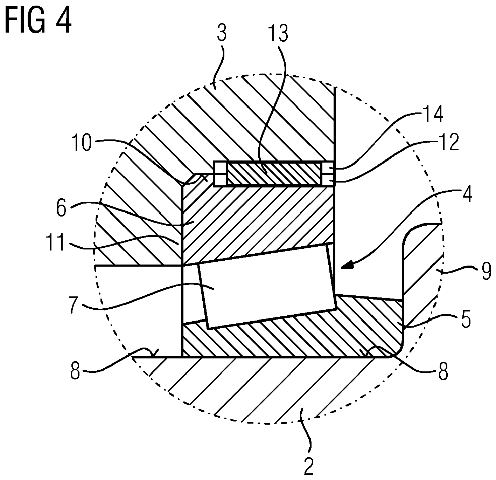

FIG 4 zeigt eine Variante, bei der die zumindest eine Aufnahme 12 in Form einer an der Außenumfangsfläche 8 des Wälzlageraußenrings 6 ausgebildeten, sich axial erstreckenden, länglich ausgebildeten Aussparung vorgesehen ist, vorliegend in Form einer Passfedernut, wobei bevorzugt mehrere solcher Aufnahmen 12 vorgesehen sind, die vorteilhaft in Umfangsrichtung des Wälzlagers 4 gleichmäßig verteilt angeordnet sind. Analoge Aussparungen sind am Innenumfang des Außenteils 3 als Gegenaufnahmen 14 vorgesehen. Die Fixierung erfolgt über entsprechend ausgebildete Fixierelemente 13, vorliegend in Form von Passfedern.

Die in den Figuren 2 bis 4 dargestellten Varianten zeichnen sich insbesondere dadurch aus, dass die Aufnahmen 12, Fixierelemente 13 und Gegenaufnahmen 14 bei der Montage des Wälzlagers 4 von außen sichtbar sind, so dass das Wälzlager 4 nicht blind montiert werden muss. Dies führt zu einer sehr einfachen Montage.

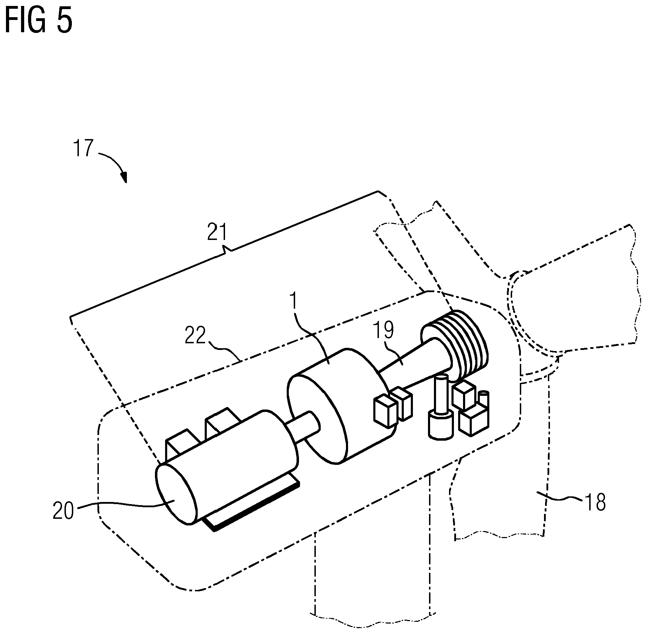

In FIG 5 ist in einer geschnittenen Schrägansicht eine Ausführungsform einer erfindungsgemäßen Windkraftanlage 17 dargestellt. Die Windkraftanlage 17 umfasst eine Rotor 18, der durch Wind in Drehung versetzbar ist. Der Rotor 18 ist über eine Rotorwelle 19 mit einer als Planetengetriebe ausgeführten erfindungsgemäßen Vorrichtung 1 drehmomentübertragend verbunden. Das Planetengetriebe wiederum ist drehmomentübertragend mit einem Generator 20 verbunden. Die Rotorwelle 19, das Planetengetriebe und der Generator 20 gehören zu einem Antriebsstrang 21, der in einer Gondel 22 der Windkraftanlage 17 aufgenommen ist. Der Generator 20 weist zwei, drei oder vier Polpaare auf. Dank des als erfindungsgemäße Vorrichtung 1 ausgeführten Planetengetriebes lässt sich der Antriebsstrang 21 einfach montieren. Darüber hinaus wird einem übermäßigen Verschleiß entgegengewirkt.

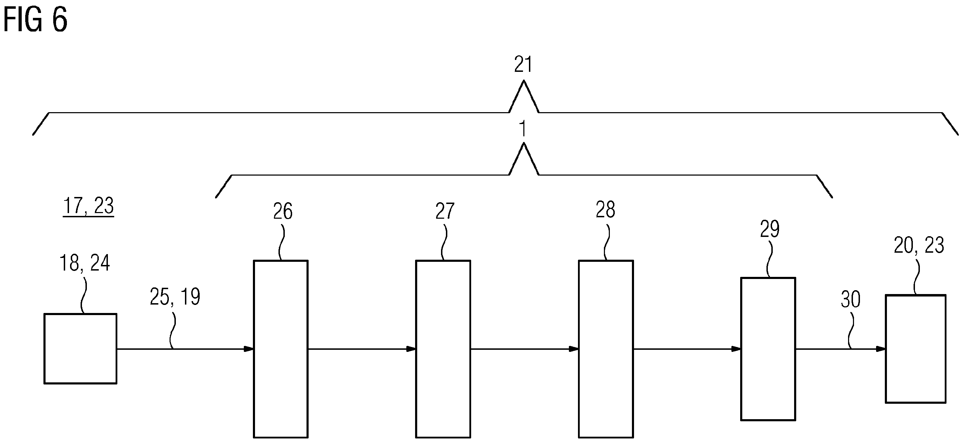

FIG 6 zeigt einen schematischen Aufbau einer weiteren Ausführungsform des erfindungsgemäßen Antriebsstrangs 21, der in einer nicht näher dargestellten Windkraftanlage 17 oder einer nicht näher dargestellten Industrie-Applikation 23 einsetzbar ist. Der Antriebsstrang 21 umfasst ein als erfindungsgemäße Vorrichtung 1 ausgeführtes Planetengetriebe, das eingangsseitig mit einem Antriebsmittel 24 oder einem Rotor 18 der Windkraftanlage 17 verbunden ist und dem so eine Antriebsleistung 25 zugeführt wird. In einer Windkraftanlage 17 erfolgt dies mittels einer Rotorwelle 19. Das Planetengetriebe umfasst vorliegend vier Planetenstufen 26, 27 und 28 sowie eine Stirnradstufe 29, die hintereinander angeordnet sind. Die Getriebestufen 26, 27, 28 und 29 geben eine Abtriebsleistung 30 an einen Generator 20 oder eine mechanische Anwendung 31 ab.

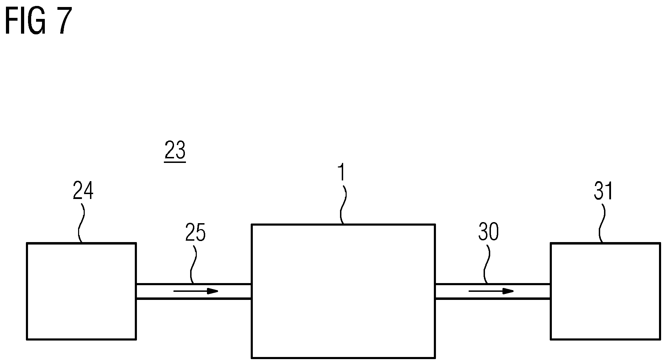

In FIG 7 ist schematisch der Aufbau einer Ausführungsform einer Industrie-Applikation 23 dargestellt, die über ein Antriebsmittel 24 verfügt. Das Antriebsmittel 24 ist dazu ausgebildet, eine Antriebsleistung 25 bereitzustellen, die durch eine drehmomentübertragende Verbindung an eine als Getriebe ausgeführte erfindungsgemäße Vorrichtung 1 transportiert wird. Das Getriebe ist wiederum drehmomentübertragend mit einer mechanischen Anwendung 31 verbunden, um eine Abtriebsleistung 30 zur mechanischen Anwendung 31 zu transportieren.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Wälzlager (4) mit einem Wälzlagerinnenring (5), einem Wälzlageraußenring (6) und zwischen dem Wälzlagerinnenring (5) und dem Wälzlageraußenring (6) angeordneten Wälzkörpern (7), wobei am Wälzlageraußenring (6) zumindest eine Aufnahme (12) ausgebildet ist, in die bei der Montage des Wälzlagers (4) ein Fixierelement (13) eingesetzt werden kann, um eine Bewegung des Wälzlageraußenrings (6) in Umfangsrichtung relativ zu demjenigen Bauteil (3), an dem der Wälzlageraußenring (6) befestigt wird, zu verhindern, **dadurch gekennzeichnet, dass** die zumindest eine Aufnahme (12) derart angeordnet ist, dass die zumindest eine Aufnahme (12) und/oder das in der zumindest einen Aufnahme (12) aufzunehmende Fixierelement (13) während der Montage des Wälzlagers (4) einsehbar ist/sind.

2. Wälzlager (4) nach Anspruch 1, **dadurch gekennzeichnet, dass** der Wälzlageraußenring (6) einen bezogen auf eine Hauptdrehachse (16) radial auswärts vorstehenden Flanschring (15) aufweist, der mit Aufnahmen (12) in Form von sich bezogen auf die Hauptdrehachse (16) axial erstreckenden Durchgangsbohrungen versehen ist, die in Umfangsrichtung des Wälzlagers (4) bevorzugt gleichmäßig verteilt angeordnet sind.

3. Wälzlager (4) nach Anspruch 1, **dadurch gekennzeichnet, dass** Aufnahmen (12) in Form von sich ausgehend von der Außenumfangsfläche des Wälzlageraußenrings (6) bezogen auf eine Hauptdrehachse (16) radial einwärts erstreckenden Sackbohrungen vorgesehen sind, die in Umfangsrichtung des Wälzlagers (4) bevorzugt gleichmäßig verteilt angeordnet sind.

4. Wälzlager (4) nach Anspruch 1, **dadurch gekennzeichnet, dass** die zumindest eine Aufnahme (12) in Form einer an der Außenumfangsfläche des Wälzlageraußenrings (6) ausgebildeten, sich bezogen auf eine Hauptdrehachse (16) axial erstreckenden, länglich ausgebildeten Aussparung vorgesehen ist, wobei bevorzugt mehrere solcher Aufnahmen vorgesehen sind, die vorteilhaft in Umfangsrichtung des Wälzlagers (4) gleichmäßig verteilt angeordnet sind.

5. Vorrichtung (1) umfassend zumindest ein ortsfest angeordnetes Innenteil (2) und ein relativ zu diesem Innenteil (2) drehbar angeordnetes Außenteil (3), **dadurch gekennzeichnet, dass** das Außenteil (3) über ein Wälzlager (4) nach einem der vorhergehenden Ansprüche an dem Innenteil (2) gelagert ist, dass das Außenteil (3) mit zumindest einer Gegenaufnahme (14) versehen ist, und dass der Wälzlageraußenring (6) über zumindest ein in die Aufnahme (12) und die Gegenaufnahme (14) eingreifendes Fixierelement (13) gegen eine Bewegung in Umfangsrichtung des Wälzlagers (4) relativ zum Außenteil (3) gesichert ist.

6. Vorrichtung (1) nach Anspruch 5, **dadurch gekennzeichnet, dass** der Wälzlageraußenring (6) über eine Spielpassung, Presspassung oder Übergangspassung an dem Außenteil (3) gehalten ist.

7. Vorrichtung (1) nach Anspruch 5 oder 6, **dadurch gekennzeichnet, dass** diese ein Planetengetriebe ist.

8. Vorrichtung (1) nach Anspruch 7, **dadurch gekennzeichnet, dass** es sich bei dem Außenteil (3) um einen Planetenträger handelt, wobei das Innenteil bevorzugt durch ein Getriebegehäuse oder einen Flansch gebildet ist.

9. Antriebsstrang (21), umfassend eine Rotorwelle (19), die drehmomentübertragend mit einem Getriebe verbunden ist, das wiederum drehmomentübertragend mit einem Generator (20) verbunden ist, **dadurch gekennzeichnet, dass** das Getriebe als Vorrichtung (1) nach einem der Ansprüche 5 bis 8 ausgebildet ist.

10. Windkraftanlage (17), umfassend einen Rotor (18), der an einer Gondel (22) angebracht ist, wobei in der Gondel (22) ein Antriebsstrang (21) angeordnet ist, der drehmomentübertragend mit dem Rotor (18) verbunden ist, **dadurch gekennzeichnet, dass** der Antriebsstrang (21) nach Anspruch 9 ausgebildet ist.

11. Industrie-Applikation (23), umfassend ein Antriebsmittel (24), das mit einem Getriebe drehmomentübertragend verbunden ist, das mit einer mechanischen Anwendung (31) drehmomentübertragend gekoppelt ist, **dadurch gekennzeichnet, dass** das Getriebe als Vorrichtung(1) nach einem der Ansprüche 5 bis 8 ausgebildet ist.
